**Europäisches Patentamt**

**European Patent Office**

**Office européen des brevets**

(11) Publication number: **0 141 302**
**B1**

## (12) EUROPEAN PATENT SPECIFICATION

(45) Date of publication of patent specification: **09.08.89**

(21) Application number: **84112062.9**

(22) Date of filing: **09.10.84**

(51) Int. Cl.⁴: **G 06 F 13/18**

(54) **Data processing system.**

(30) Priority: **25.10.83 IT 2341083**

(43) Date of publication of application:
**15.05.85 Bulletin 85/20**

(45) Publication of the grant of the patent:
**09.08.89 Bulletin 89/32**

(84) Designated Contracting States:
**BE CH DE FR GB LI NL SE**

(56) References cited:
**FR-A-1 379 319**
**US-A-3 710 324**
**US-A-4 415 972**

(73) Proprietor: **BULL HN INFORMATION SYSTEMS
ITALIA S.p.A.
Via Martiri d'Italia 10
I-10014 Caluso (Torino) (IT)**

(72) Inventor: **Ciacci, Franco
via Goito 7
Magenta (Milano) (IT)**
Inventor: **Pizzoferrato, Vincenzo
Via Aristotele 7
Cornaredo (Milano) (IT)**
Inventor: **Tessera, Giancarlo
Via Crimea, 13
Milano (IT)**

Courier Press, Leamington Spa, England.

## Description

The present invention relates to a data processing system.

It is known that a so-called bus architecture is largely used in data processing systems, where one or more central processors (in multiprocessor systems), a plurality of peripheral controllers and one or more working memories communicate each other through a common channel or bus to which each of the mentioned units accesses to transfer information to another one of the mentioned units.

The bus architecture, while involving some limitation, is largely used because allows a wide flexibility in the system configuration according to the user requirements and reduces the number of connection leads among the several units.

Data processing systems having bus architecture are for instance disclosed by US Patents Nos. 3,710,324, 4,303,808 and 3,993,981.

Essentially the bus architecture limitations are caused by three kind of factors:

I) Conflict factors in the use of the bus by the several unit;

II) Synchronization factors in the operation of the several units;

III) Factors of electrical propagation of the signals.

I) In a bus architecture means must be provided to assure the ordered transfer of information on the bus and to solve conflicts and interferences which may arise during the use of the bus. In the generally adopted solutions a privileged unit or "Master", which can be the central processor, controls the access to the bus in order to settle conflicts. To this purpose a preestablished priority is assigned to each unit. Further each unit which wants to have access to the bus sends an access request to the Master before loading the bus with electrical signals representative of information. The Master periodically controls if bus access requests are present and in the case of several contemporaneous requests it grants the bus to the most priority requesting unit.

In other words the effective use of the bus is preceded by a signal exchange on suitable leads, or preamble dialogue, which requires a certain time interval and reduces the information transfer speed or "transfer rate" of the bus.

Generally this limitation is overcome by a temporal overlapping of the preamble dialogue with the actual bus information transfer. This is generally possible in the case of bus access requests from peripheral controllers. On the contrary the central processors cannot systematically take advantage of this possibility. In fact its subsequent behaviour, and therefore a subsequent bus access request is often conditioned by the actual transfer (sending or reception) of a previous information through the bus. Therefore such operation must be completed.

As for instance disclosed by U.S. Patent 3,710,324 this specific limitation is overcome by designating a central processor as Master. In this case, if the bus is available and if no prioritary access requests are present, at least the central processor acting as Master can directly have access to the bus without any preliminary dialogue.

II) The operation of the several interconnected units through the bus is asynchronous. In other words each unit operates according to its own machine cycle, independently from the other units.

When a unit wants access to the bus, its request is considered and the bus access is granted at instants independent from its timing, but according to the Master timing. It is therefore necessary that the unit stops its operations awaiting for grant. Alternatively bus interface registers must be supplied to temporaneously store the information to be transferred (received or sent) through the bus while, in some cases, the unit can go on to execute other operations. In both the cases a synchronization on the Master is required. Besides the information transfer involves two units and therefore a further synchronization, with the unit to which the information is sent, is required.

Such synchronization occurs with a second preamble dialogue, which confirms the availability of the receiving unit to the information transfer, or with a posteriori confirmation of the occurred transfer. In any case such confirmation lengthens the transfer duration because it cannot overlap other phases of the process. Generally such inconvenient is overcome by limiting the information exchange through the bus to the information exchange between any of the units and the memory. In this case the working memory can act as Master for the bus access control and the Master synchronization for the bus access coincide with the working memory synchronization.

In this case, for instance disclosed by U.S. Patent 4,303,808, the confirmation phase is not required because implicit in the preamble dialogue.

It is however obvious that the choice of the working memory as Master is incompatible with the choice of a central processor as Master.

III) The bus is a communication channel constituted by a plurality of electrical leads connecting several units one another. Such leads have a considerable length and irregular impedance characteristics owing to several connections (through connectors) to the several units arranged along the lead length. Therefore the bus often undergoes electrical "noise" and signal reflections. Therefore the signal transfer to the bus must be generally controlled through driving gates or "drivers" arranged at the interface of each unit. Further each unit must be provided with suitable receiving gates. Obviously the drivers must be of tristate type so that their output impedance is virtually infinite when the corresponding unit has no signals to transfer to the bus.

The used drivers and receivers have a typical signal propagation delay of about 20—40 nsec which considerably increases the duration of the bus communication process.

Typically a bus information transfer, for instance the addressing of a working memory by a unit and the reading out of information from memory, requires about 600—800 nsec. It is clear that the presence of drivers and receivers on the information path increases such time of 40—80 nsec that is of about 10%.

The situation further deteriorates when, owing to synchronization reasons, some latching registers are arranged in the intercommunicating units, or in one of them on the information path.

Conceptually each system unit is organized around its own internal channel which receives information from logical arithmetical circuits or memory circuits and selectively transfers such information to such circuits for further processing. The internal processing cycle is very short, about 300—500 nsec when the information to be processed is already in the unit. However if the information to be processed is to be sent to or received from the exterior, register and gates for the connection with the outside, for instance with the system bus, are required. This involves substantial delays between the instant when the information is available on the internal (external respectively) bus and the instant when the information is available on the external (internal respectively) bus.

In conclusion the configuration flexibility and the saving in connection number obtained with a bus architecture are to the detriment of the operation time which is substantially increased.

The present invention as claimed in claim 1 provides a bus architecture which partially eliminates such inconvenients and assures a high operation speed to a central processor also when it has to process information received from the working memory.

At the same time the invention system architecture allows the overlapping of the preamble dialogue with the information exchange between controllers and working memory.

These advantages are obtained with a bus architecture whose peripheral controllers communicate with a working memory through a bus while a central processor communicates with the working memory through a separate channel.

The bus access control is essentially assigned to the central processor which synchronizes the bus access with its own internal cycle. In this way no bus and memory access requests are sent by the peripheral controllers, the central processor can directly access to the memory without any preliminary dialogue and therefore without delays in the information transfer process. When the central processor acknowledges bus (and memory) access requests and the bus is free, it activates a timing or I/O (input/output) cycle independent from its internal cycle, grants the bus access to the most priority requesting controller and activates a memory cycle synchronized with the I/O cycle. During such cycle the presence of other bus access requests is verified and at the end of the cycle a new bus access is immediately granted. Lacking new access requests the bus control is synchronized again with the central processor cycle.

The connection between peripheral controllers and memory, or between central processor and memory, through the bus is made by means of a tridirectional connection gate. The tridirectional gate directly connects the central processor internal channel and the memory one without the interposition of interface registers or of elements such as receivers or drivers. In this way the information transfer between central processor and memory is extremely fast.

These and other features and the invention advantages will appear clearer from the following description of a preferred invention embodiment and from the enclosed drawings where:

Figure 1 shows in block diagram a data processing system object of the invention.

Figure 2 shows the leads constituting a communication bus used in the system of Figure 1.

Figure 3 shows a detailed block diagram of the central unit of the system in Figure 1.

Figure 4 shows in timing diagram some signals generated by the central unit of Figure 3 and used for the timing and the control of the system in Figure 1.

Figure 5 shows in detailed block diagram the control unit controlling, in the system of Figure 1, the access to a common memory by the central unit and by the input/output processors connected through BUS of Figure 2.

Figure 6 shows in timing diagram some timing and control signals generated by the access control unit of Figure 5.

Figure 7 shows in block diagram the working memory of the system in Figure 1.

Figure 8 shows in detailed block diagram the input/output processor of the system in Figure 1.

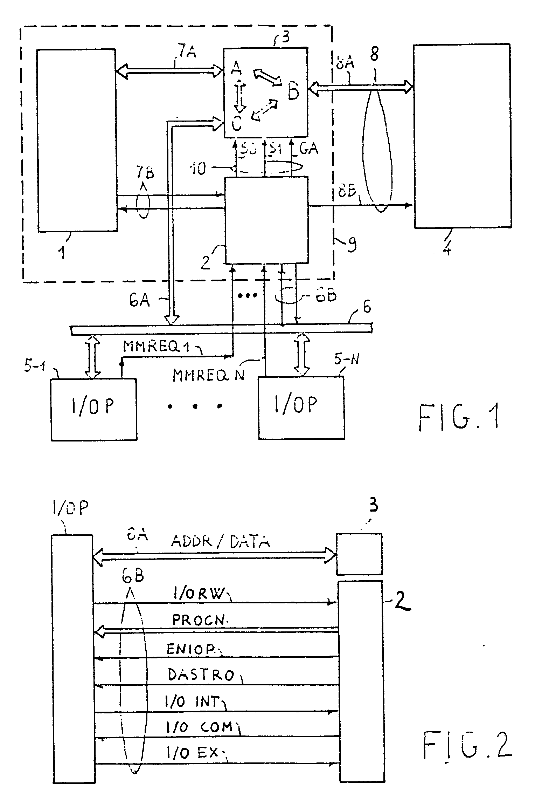

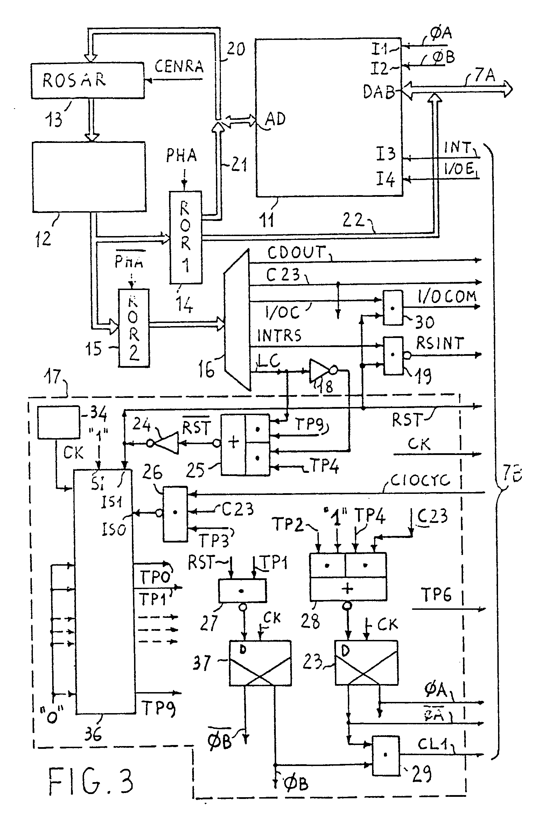

With reference to Figure 1 the system object of the invention is shown in simplified block diagram.

The system of Figure 1 comprises a central processor or CPU 1, one access control unit 2, a set of tridirectional communication gates 3, a main memory or MM 4 and a plurality of input/output processors or I/OP 5-1,..., 5-N, parallely connected through common channel or BUS 6.

BUS 6 consists of a group of leads 6A (for instance 20 leads) for the bidirectional transfer of addresses/data/commands and of a group of leads 6B for the transfer of unidirectional control signals.

The group of leads 6A is connected to a first input/output group C of tridirectional gates 3. The group of leads 6B is intended for the control information exchange between the several processors IOP and access control unit 2.

CPU1 communicates with a second input/output group A of gates 3 through a channel 7A constituted by a group of 20 leads for the bidirectional transfer of addresses/data/commands. CPU1 communicates with unit 2 through a group of leads 7B for the exchange of control signals.

Memory 4 communicates with gates 3 and control unit 2 through a channel 8 constituted by a group of leads 8A, for the bidirectional trasnfer of addresses/data/commands between memory 4 and a third input/output group B of gates 3, and by a group of leads 8B for the exchange of control signals with control unit 2.

As better explained later on, control unit 2 substantially consists of a priority network for settling the conflict in case of several contemporaneous memory access requests by the several IOP, of a timing unit for BUS 6 and the memory and of a control logic for gates 3 to selectively establish a connection among the several input/output groups A, B, C.

Unit 2 controls gates 3 through channel 10, through which selection signals GA, SO, S1 are sent to gates 3. Unit 2 and gate sets 3, while shown separated from CPU1, may be part of the central processor and are preferably mounted on the same printed circuit board containing the CPU and marked with reference number 9. Therefore the system is physically constituted by a plate 9, a memory 4, several I/OP 3-1, . . . , 3-N. BUS 6 connects the several I/OP to plate 9.

Channel 8, which directly connects plate 9 to memory 4, can be very short, it has not intermediate taps and does not require drivers and interface receivers. Further each I/OP is individually connected to unit 2 in plate 9 through a lead MMREQ1,. . . , MMREQN respectively. Through such lead each I/OP can send a BUS 6 and memory access request to unit 2.

Figure 2 shows the leads constituting BUS 6.

BUS 6 comprises 20 leads ADDR/DATA for the bidirectional exchange of data and addresses (channel 6A).

Channel 6B comprises:

—a lead I/ORW intended to transfer an omonimous signal I/ORW from the several I/OP to unit 2, such lead determining, according to its logical level, 0, 1, if the memory access is required for a read or write operation respectively.

—a set of leads PROCN, the number of which depends on the number of I/OP, intended to transfer an omonimous coded information PROCN selecting an I/OP, from unit 2 to the several I/OP. If the I/OP are 8 or less than 8, 3 leads suffice.

—a lead ENIOP to enable unit 2 to signal to the several I/OP that BUS 6 and memory access has been granted to the I/OP specified by leads PROCN. The signal on lead ENIOP is used as "strobe" for the signals on leads PROCN. It has further timing functions.

—a lead DASTRO to enable unit 2 to signal to the several I/OP that data are present on channel 6A. The signal on lead DASTRO is used as "strobe" for the signals on channel 6A.

—a lead I/O INT to enable the I/OP to signal to unit 2 that an I/OP has stored a message in memory which must be read out by the CPU.

—a lead I/O COM to signal from unit 2 to the several I/OP that the CPU is sending a command to an I/OP. The kind of the command and the I/OP involved are specified by channel 6A contents.

—a lead I/O EX to signal from the involved I/OP to the CPU that command I/O COM has been received.

Figure 3 shows in block diagram the CPU in the form required for the invention understanding.

The constructive details and the variants of a central processor are well known to the people skilled in the art.

Further integrated circuits are available on the market which allow to embody CPUs suitable to be used in the present invention with the addition of few external components.

The architecture and the application of these integrated circuits are widely disclosed by the technical manuals of the manufacturers, among which INTEL, MOSTEK, AMD, SYNERTEK are mentioned.

CPU1 substantially comprises a logical/arithmetical unit or RALU 11, a control memory 12 containing control microprograms, an addressing register or ROSAR 13 for control memory 12, two microinstruction registers 14, 15 respectively or ROR 1, ROR 2, a microinstruction decoder 16 and a timing unit 17.

Besides logical/arithmetical networks unit RALU contains suitable working register banks. RALU 11 comprises two inputs I1, I2, receiving two timing signals ØA, ØB respectively from the timing unit, a first set of gates DAB which may act, in different phases, as input or output gates and which are directly connected to channel 7A, a second set of gates AD which may act, in different phases, as input or output terminals, and two inputs I3, I4 for receiving a signal INT and I/OE respectively.

The gates AD are connected to register ROSAR 13 inputs through channel 20 and to some outputs or register 14 (ROR 1) through channel 21.

The gates DAB are connected, besides to channel 7A, to some outputs of register 14 (ROR 1) through channel 22.

Register 13 outputs are connected to the addressing inputs of control memory 12 whose outputs are connected to the inputs of both register 14 (ROR 1) and register 15 (ROR 2).

Register 15 outputs are connected to the inputs of decoder 16.

Register 13 (ROSAR 1) is enabled to load an address by a timing signal CENRA received from the timing unit.

When CENRA is at "1" the address is loaded. When CENRA is at "0" the address contained in ROSAR is steadily present at the output.

Register 14 (ROR 1) is enabled to load a microinstruction in output from the control memory by a timing signal PHA. When PHA is at "1" the microinstruction is loaded while the outputs are kept in a high impedance status. When PHA is at "0" the microinstruction contained in ROR 1 is steadily present at the outputs.

Likewise register 15 (ROR 2) is enabled to load a microinstruction by a timing signal $\overline{PHA}$="1" and this microinstruction is steadily present at the outputs when $\overline{PHA}$="0".

Unit RALU 11 operation takes place during several machine cycles each one constituted by a first and a second phase during which it is ØA=1 and ØA=0 respectively.

When ØA=1 each one of gate sets DAB and AD is enabled to receive in input a portion of the microinstruction contained in ROR 1. To this purpose PHA=0 within the interval during which ØA=1. The received microinstruction controls the operation executed by RALU 11 during the machine cycle.

Among such operations the establishing of the subsequent microinstruction address in the control memory is present.

During the second phase the address is available at gates AD and is loaded into ROSAR 13. To this purpose CENRA=1 when ØA=0. Always during the second phase gates DAB are enabled, if necessary, to receive or load some information from or into channel 7A. This occurs if the pending microinstruction controls input/output operations, that is read/write memory or the sending of controls to the I/OP.

These operations will be detailed later on.

The microinstruction loaded into register 15 (ROR 2) is decoded by decoder 16 in a set of commands (microcommands) which control both the operations outside unit 1 and the operation of timing unit 17 and that, once loaded register 15, are present for the whole remaining duration of the machine cycle.

The meaningful commands for the invention understanding are:

—CDOUT: this command means that during the machine cycle RALU 11 loads channel 7A with some information which must be transferred outside.

—C23: this command indicates that during the machine cycle the CPU wants to start a read/write memory cycle.

—I/O COM: this command indicates that the CPU wants to send commands to an I/OP.

—INTRS: this command indicates that the CPU wants to reset the interruption signal INT received by RALU.

—LC: this command indicates that the pending machine cycle must be long for managing the execution of determined operations such as, for instance, the access to a local memory contained in RALU 11 or for matching its own cycle duration to the duration of memory 4 cycle in case of write/read memory.

Command LC is sent to timing unit 17 in direct form and in inverted form, through NOT 18.

Command INTRS is NANDed, (through NAND gate 19) with a signal RST coming from timing unit 17, and generates a signal RSINT falling to 0 at the end of a machine cycle (if INTRS=1).

Command I/OC is ANDed (through AND gate 30) with signal RST and generates a signal I/O COM timed as RST.

Unit 17 generates an output some periodical timing signals, some of which, such as CEN, RAD, PHA, $\overline{PHA}$, ØB are only used for CPU1 timing, other ones, such as ØA, RST, are used for both CPU1 and control unit 2 timing, other ones again, such as ØA, CK, TP6, CL1 (which will be mentioned later on), are used for unit 2 timing.

Unit 17 receives in input a signal CIOCYC from unit 2.

The several leads transferring signals INT, I/OE, CDOUT, C23, I/O COM, RSINT, CK, CIOCYC, ØA, $\overline{ØA}$, CL1 constitute channel 7B of Figure 1.

For sake of clearness such leads will be named in the following with the same reference name of the signal they transfer.

Timing unit 17 is substantially constituted by an oscillator 34, a shift register 36, two flip-flops 37, 23 and by suitable logical gates.

Oscillator 34 generates a square wave clock signal CK with preestablished period of 50 nsec.

Such signal is applied to the input of shift register 36 and of flip-flops 37, 23. Besides, as already mentioned, it is transferred to unit 2.

Shift register 36, with 10 bit capacity, comprises a serial input SI permanently connected to "1", ten parallel loading inputs permanently connected to "0" and two control inputs IS1 and IS0.

When IS0=1, IS1=0 at each rising edge of CK, register 36 shifts the logical level contained in each cell to the subsequent one.

When IS0=0, IS1=0 register 36 is locked in the current status, that is the clock pulses do not modify its status.

When IS0=1, IS1=1 at each rising edge of CK the register parallely loads the several cells with the level present at the parallel loading inputs. Practically it is reset.

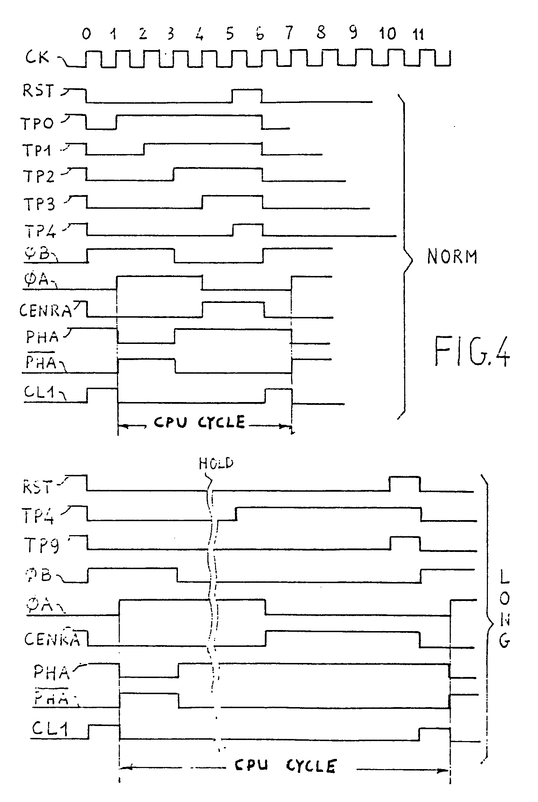

Timing signals TP0, TP1, . . . , TP9 are available at several outputs of register 36. The timing of these signals is shown in Figure 4.

Input IS1 receives signal RST obtained from a signal $\overline{RST}$ through NOT 24. At its turn $\overline{RST}$ is obtained in output from AND-OR-NOT gate 25.

Gate 25 receives at the inputs of a second AND section signals $\overline{LC}$ and TP4.

Input IS0 is connected to the output of NAND gate 26 receiving in input signals CIOCYC, C23, TP3.

Briefly register 26 operation is the following:

From an initial reset status, where the register is discharged (TP9=0, TP4=0, TP3=0), the register begins to load, starting from its first cell, at each clock pulse. After 4 clock pulses TP3 rises to 1. If, at this point, C23 and CIOCYC are at 1 too the register status is locked. Instead if at least one of signals C23, CIOCYC is at 0 the register goes on loading. After 5 clock pulses TP4 rises to 1. So if $\overline{LC}$=1 signal RST rises to 1.

With the subsequent clock, that is after 6 clock pulses, register 21 is reset.

If $\overline{LC}=0$ register 36 goes on loading. After 10 clock pulses TP9 rises to 1 and as LC=1 signal RST is generated.

With the subsequent clock, that is after 11 clock pulses, register 36 is reset.

In conclusion register 36 cyclically develops and defines machine cycles of variable duration.

Lacking signal CIOCYC from unit 2 these cycles have a duration of 300 nsec or 500 nsec according to the presence of signals $\overline{LC}$ or LC respectively.

When a signal CIOCYC is present in unit 2 together with signal C23 the pending cycles are suspended till CIOCYC falls again to level 0.

Flop-Flop 37 of D kind receives signal CK at the clock input and signal $\overline{RST \cdot TP1}$ in output from NAND 27, at D input.

Signals $\emptyset B$ and $\overline{\emptyset B}$ are available at the outputs of flip-flop 37. Likewise signals $\emptyset A$ and $\overline{\emptyset A}$ are available in output from flip-flop 23 which is clocked by signal CK and receives at the input D signal $\overline{TP2+TP4+C23}$ obtained from AND, OR, NOT gate 28.

Signal CL1 is obtained as logical product of $\emptyset A$ and $\emptyset B$ through AND gate 29.

Signal CENRA, PHA, $\overline{PHA}$ are obtained from signals $\emptyset A$ and $\emptyset B$ through logical circuits which are not shown in Figure 3 for sake of simplicity.

Figure 4 shows in timing diagram the several signals.

It is clear that CENRA is obtained by the logical operation $\emptyset A+\emptyset B$, that $\overline{PHA}=\emptyset A \cdot \emptyset B$ and that $PHA=\overline{\emptyset A \cdot \emptyset B}$.

In Figure 4 the cases of normal timing cycle and long cycle are shown (Diagram NORM and diagram LONG respectively).

In the case of long cycle it is evidence that, between the clock pulse with order number 4 and the one with order number 5, the cycle may be extended (HOLD) for a variable number of clock periods owing to the contemporaneous presence of signals CIOCYC and C23.

The mutual relation between timing and CPU cycles can be arbitrarily established.

For instance it may be stated that a machine cycle starts as soon as register 36 is reset. (Instant defined by CK=0).

Conceptually it would be better to consider as cycle start the instant when $\emptyset A$ rises to 1. In fact, as already mentioned, RALU11 beings to receive the internal commands controlling its operation during the cycle beginning with such instant. Besides independently from its length, the machine cycle is divided in two phases.

During the first phase, when $\emptyset A=1$, RALU 11 receives the necessary commands and generates the subsequent microinstruction address.

During the second phase, when $\emptyset A=0$, RALU 11 emits the following microinstruction address on outputs AD and, if necessary, enable gates DAB to communicate with the outside.

During the whole second phase (and a little before) the command (microcommands) necessary to control the operation external to RALU 11 are also available.

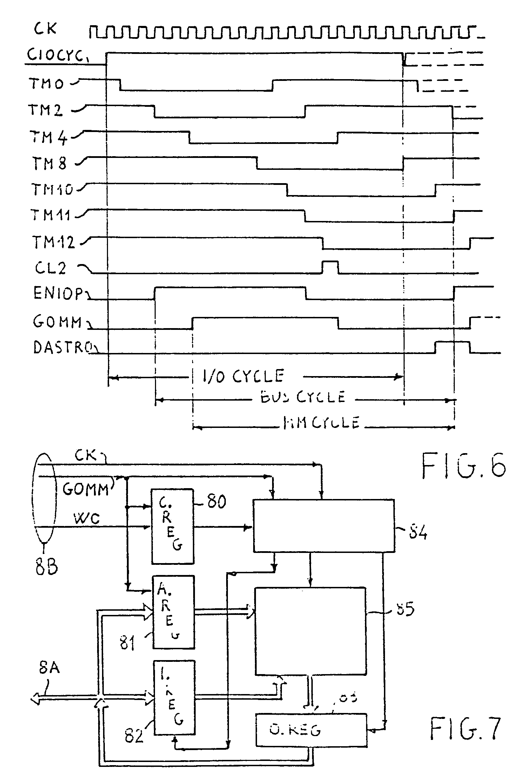

Working memory MM4 architecture, shown in block diagram, in Figure 7, is quickly disclosed before considering in detail control unit 2.

Memory 4 architecture is of a known and conventional type therefore only few indications are required. A more detailed description can be found for instance in U.S. Patent 4,249,253.

Memory 4 comprises a register 80 (CREG) for the latching of input commands, a register 81 (AREG) for the latching of an input address, a register 82 (IREG) for the latching of input data, a register 83 (OREG) for the latching of output data, a timing and control unit 84 and a memory cell matrix 85 or Memory Module.

The inputs of registers 81 and 82 are directly connected to channel 8A (Figure 1).

Register 80 receives in input some memory commands through channel 8B (Figure 1).

Figure 7 shows that register 80 receives in input through lead WC a command specifying the operation to be executed. If the command is at logical level 1, the operation is a write operation, if it is at logical level 0, the operation is a read out one.

Generally memory 4 may receive further commands defining for instance if the memory is to be read or written on all its parallelism (i.e. 2 bytes) or if only 1 byte is to be read/written and if this byte must be the right or the left one.

These features are completely beyond the scope of the invention.

Control and timing unit 84 receives in input, through channel 8B, the periodic timing signal CK and an activation command GOMM. The activation command GOMM causes the loading of register 80 and 81 with the commands present on leads such as WC and with an address present on channel 8A respectively. When command GOMM is received, the timing and control unit is activated. It generates a timing cycle during which suitable commands are developed. Such commands control the addressing of module 85 with the address contained in register 81, and, if the operation is a write one, they control the loading of register 82 with the data to be written and the sending to module 85 of the data to be written. If the operation is a read out one they control the loading of the readout data into register 83 and their transfer to channel 8A.

The disclosed memory is of the kind where only one channel 8A is used to transfer addresses and data with the multiplexing technique.

In fact for module 85 operation it is necessary that the addresses be available already at the beginning of the memory cycle while the data to be written are necessary and the readout data are available only at the end of the memory cycle.

Typically memory 4 can have a cycle of 800 nsec and require that the data to be written are available in register 82 600 nsec at least after the beginning of the cycle, while the read out data are available during the last 150 nsec of the cycle at register 83 outputs.

After these explanations a description is given about the read/write memory operations performed by CPU1 even if control unit 2 has not been described yet. As explained later on, if no access memory requests from I/OP have been accepted, control unit 2 is transparent to the information exchange between CPU1 and memory 4 and presets gates 3 status for the exchange between CPU1 and memory 4. So, during a first machine cycle of 550 nsec CPU1 can generate a memory activation command and put an address on outputs DAB. The address is available (Figure 4) on channel 7A, 250 nsec after the beginning of the cycle and is made available at register 81 inputs through gates 3 with the sole propagation delay due to such gates and to the length of the connection, differently from the case where the connection are made through the bus and a register, drivers and receivers in cascade.

Command C23 is available even before the address but it is suitably delayed, as explained later on, by control unit 2, in order to be received by memory 4 about 300 nsec after the beginning of CPU cycle, that is when the address is steadily present at the inputs of register 81. So register 81 can be loaded and a memory cycle starts.

At the end of the first machine cycle, CPU1 starts a second machine cycle, of the length of 550 nsec too; during the second phase of which (ØA=0) CPU1 enables gates DAB to send data to be written in memory or to receive the data to be read out from memory. Therefore 250 nsec after the beginning of the second CPU cycle and approximately 550 nsec after the beginning of the memory cycle, the data to be written are available on channel 8A 600 nsec after the beginning of the memory cycle.

In the reading case, the read out, data available on memory channel 8A 650 nsec after the beginning of the memory cycle, that is approximately 400 nsec after the beginning of the second CPU cycle, are certainly available at gate DAB 500 nsec after the beginning of the second cycle and can be loaded into RALU 11, for instance with the rising edge of signal ØB used as "strobe".

With a third machine cycle CPU1 can control a new access memory operation and so on.

A transfer rate between memory and CPU1 is obtained equal to $10^9/1100$ memory operations per second which is not hampered by any preliminary dialogue with unit 2 to get memory access. It is to be noted that the 1100 nsec period for the read out memory longer than the memory cycle of 800 nsec, is limited by the structural bonds of a CPU1 using one only DAB gate to send addresses and to send/receive data, as well as by the logical bond stating that a read/write memory operation is generally conditioned by the success of the previous one and that the addresses are available in CPU1 only in a second phase of machine cycle.

If a hypothetical CPU1 is able to send to, receive from memory a datum and contemporaneously send to memory an address for subsequent read out operation, an overlapping of CPU cycles dedicated to memory access operations can be obtained and the transfer speed is only affected by the memory cycle length. Practically such CPU1 architecture is not used because it is preferable to be sure of the success of each read/write memory operation before starting a further read/write operation. In fact it is known, even if the consideration is beyond the scope of the invention, that an information received by memory for writing and an information read out from memory can be affected by error detected through the associated parity bits.

In the first case the memory generates an error signal at the end of the cycle, in the second one the CPU1 itself detects the error. In both the cases the result of the error control is available to CPU1 only at the end of the memory cycle. Therefore other memory operations are not admitted before a previous memory operation is concluded.

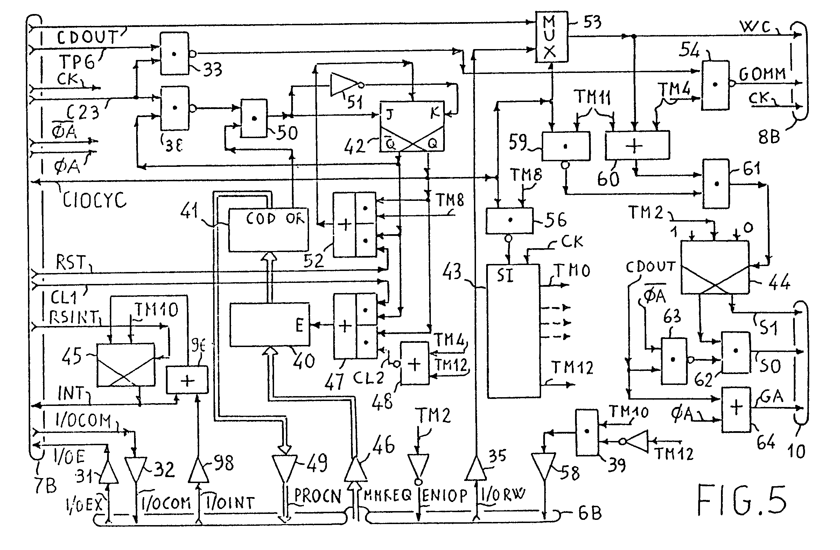

Figure 5 shows in detail control unit 2.

The function of unit 2 is to handle the several I/OP access requests to BUS 6 and memory 4 and to handle in transparent way memory 4 access by CPU1, when access requests from I/OP are not present.

Essentially unit 2 comprises a priority network, a timing unit, a control logic for gates 3.

The priority network is constituted by a register 40, a priority encoder 41, a control flip-flop 42 and logical gates which will be considered later on.

The control logic of gates 3 consists of a flip-flop 44 and logical gates which will be considered later on.

The timing unit is constituted by a shift register 43 and by a NAND gate 56. The timing unit can have an active status and an inactive one. When active, it generates a train of timing signals TM0, . . . , TM12 (as timing unit 17) defining an I/OP (input/output) cycle. When inactive signals TM0, TM12 are permanently at logical level 1.

Considering now the priority network, register 40 inputs are connected to leads MMREQ through receivers 46. The access memory requests present on leads MMREQ are latched in register 40 when a signal at level 1 is received at control input E. Control input E is connected to the output of AND-OR gate 47 having two AND input sections. Two inputs of a first section are respectively connected to lead CL1 and to the output $\overline{Q}$ of flip-flop 42. Two inputs of a second section are respectively connected to output Q of flip-flop 42 and to the output of a NOR gate 48.

NOR gate 48 receives in input two timing signals TM4, TM12. The outputs of register 40 are connected to the input of priority encoder 41.

The priority encoder assigns a preestablished priority to the signals present on each input and emits, on its COD outputs, a code representative of the most prioritary signal present at the input.

COD outputs of encoder 41 are connected, through a driver set 49, to leads PROCN. Further an output OR of the encoder emits a signal at logical level 1 each time an access request at least is present in input. Output OR is connected to an input of AND gate 50. A second input of AND gate 50 is connected to the output of a NAND gate 38 having the inputs connected to lead C23 and to the output Q of flip-flop 42. The output of NAND gate 50 is connected to input J of flip-flop 42 and, through a NOT 51, to input K.

Clock input of flip-flop 42 is connected to the output of AND-OR gate 52 having two AND sections. A first AND section has an input connected to the output Q of flip-flop 42 and receives the timing signal TM8 at a second input. The second AND section has an input connected to the output Q of flip-flop 42 and receives the timing signal RST at a second input.

A communication path between CPU1 and memory 4 or between channel 6B and memory is established by multiplexer 53.

Multiplexer 53 receives signal CDOUT coming from CPU1 at a first input and signal I/ORW coming from BUS 6 at a second input, through receiver 35.

The output of multiplexer 53 is connected to a lead WC transferring to memory 4 a read/write command depending on its logical level 0 or 1 respectively. Memory 4 activation is caused by a command at logical level 1 on lead GOMM.

Lead GOMM is connected to the output of a NAND gate 54 receiving on a first input a timing signal TM4.

The second input of NAND gate 54 is connected to the output of a NAND gate 33 receiving in input signal TP6 and command C23 both coming from CPU1.

Memory 4 further receives from CPU1 the timing signal CK through an omonimous lead.

Leads WC, CK, GOMM constitute channel 8B of Figure 1.

The operation of the priority network is now considered without detailing the timing section of unit 2 which will be considered later on.

The status of flip-flop 42 essentially indicates whether an I/O cycle, that is a memory and BUS 6 occupation by one of the I/OP is running.

When flip-flop 42 is set it generates a signal CIOCYC=1 at its direct output Q and when it is reset generates a signal $\overline{CIOCYC}$=1 at its inverted output $\overline{Q}$.

If flip-flop 42 is reset no I/O cycles are running, the timing section is inactive, TM4 is kept at logical level 1 and CPU1 receives a signal CIOCYC at logical level 0. Hence CPU1 normally performs its machine cycles, normal or long according to its own needs. Particularly, if CPU1 wants to access the memory, it generates command C23 which, suitably timed by signal TP6, is transferred through NAND 33 and 54 and generates command GOMM. No preliminary dialogue takes place between CPU1 and control unit 2 and the CPU can access memory 4 without delays.

The kind of memory operations (read/write) is established by command CDOUT which is transferred to memory 4 through multiplexer 53 generating signal WC.

CPU1, during its operation, periodically emits, at each machine cycle, signals CL1 and RST. With reference to Figure 4 CL1 is emitted at the end of a CPU1 cycle and RST straight before CL1.

When flip-flop 42 is reset, signal CL1, emitted at the end of a cycle N of CPU, enables the loading of register 40 and possible access requests present on leads MMREQ are loaded into register 40 and are made available at the inputs of decoder 41. After a certain time, however, shorter than 200 nsec encoder 41 makes the signals corresponding to the access request status available at outputs COD and OR. If one access requests at least is present, output OR rises to 1. At the end of the subsequent cycle N+1 of CPU1, straight before CL1, RST applies a CLOCK pulse to flip-flop 42, through AND-OR gate 52. In case cycle N+1 of CPU1 does not require memory operation from CPU1, and therefore C23=0, flip-flop 42 is set or kept in reset depending on whether output OR of encoder 41 is at level 1 or 0. If C23=1 the set of flip-flop 42 is inhibited. In fact an I/OP memory access request considered at the end of cycle N+1 of CPU1 cannot prevail over a CPU1 operation already running requiring a read/write memory operation. In this case, CPU1 addresses memory 4, through gates DAB and 3, with cycle N+1 and with the subsequent cycle N+2 completes the memory operation loading channel 7A with the information to be written in memory or receiving from channel 7A the information read out from memory. Only at the end of cycle N+2 signal RST1 causes the set of flip-flop 42, that is the pending request MMREQ is considered.

In conclusion, if no I/OP access memory are running the MMREQ status is periodically verified by unit 2 in synchromism with the operations of CPU1 which can access the memory without delay each time it wants, provided no I/OP requests are present.

Memory 4 access by CPU1 takes place during two CPU cycles, an addressing cycle and a read/write one.

When unit 2 detects some access requests MMREQ and when the possible, running memory operation of CPU1 is completed, flip-flop 42 is set and the timing control of the access memory operations through bus 6 is performed by timing section of unit 2. In fact when flip-flop 42 is set, signal CIOCYC sent to CPU1 is at logical level 1. Therefore CPU1 can go on, in an asynchronous way, with its machine cycle but, if during a machine cycle a memory operation is required, the memory access is inhibited and the corresponding machine cycle is stopped until CIOCYC falls again to 0. Further, when flip-flop 42 is set, the input sections AND, of AND-OR gates 52 and 47, receiving the timing signals generated by the timing section of unit 2 are enabled. Instead, the input section AND receiving signals RST1 and CL1 from CPU1 are inhibited because $\overline{CIOCYC}$=0.

It is now useful to consider the timing unit of unit 2 comprising shift register 43 and NAND 56.

Serial input SI of shift register 43 is connected to the output of NAND gate 56 and receives on its clock input the signal CK.

A first input of NAND gate 56 receives signal

8

CIOCYC present at the output Q of flip-flop 42 and the second input receives signal TM8 present at the omonimous output of register 43.

When flip-flop 42 is reset, a logical level 1 is present at input SI of register 43 and the register is loaded, that is its outputs TM0, . . . , TM12 are at logical level 1.

When flip-flop 42 is set, input SI of register 43 falls to 0 and register 43 progressively discharges at each pulse CK, that is outputs TM0, . . . , TM12 falls in sequence to 0.

When output TM8 falls to 0 input SI of register 43 rises to 1 and the register charges again with the subsequent pulses CK.

When TM8 rises again to 1 flip-flop 42 receives a clock pulse and it is kept in set or arranged in reset according to the status of its inputs J and K.

If flip-flop 42 is kept in set, register 43 starts again to discharge, otherwise it completes its charging and maintains its charged status until flip-flop 42 is set again.

Figure 6 shows in timing diagram the signals present on some of outputs TM0, . . . , TM12 as well as some derived signals.

Evolution of register 43 defines subsequent I/O (input/output) timing cycles of a duration of 900 nsec. Within these cycles the signals present on outputs TM0, . . . TM12 are used to generate suitable interface signals.

Figure 5 and 6, jointly considered, show that signal TM2, through driver inverter 57, generates signal ENIOP of BUS 6.

The reception of ENIOP by the I/OP effectively starts a bus cycle, that is the I/OP which has received the BUS access can actually load channel 6 with some information.

It can be noted that signal ENIOP is generated with a delay of about 150 nsec as to the beginning of the I/O cycle. Such delay is essential to allow the completion of previous memory operations. In fact as mentioned, an I/O cycle starts when flip-flop 42 is set and this occurs 100 nsec before the end of the possible previous memory cycle activated by CPU. Further, as it will be explained later on, a memory cycle activated by control unit 2 terminates 150 nsec after the beginning of a possible new I/O cycle.

The "BUS cycle" is 900 nsec long too, but it is 150 nsec delayed as to the I/O cycle.

Signal TM4 supplies the memory activation signal GOMM through NAND 54. The generation of GOMM starts a memory cycle.

Signal GOMM is always generated after ENIOP (in this case the delay is of 100 nsec) to enable the several I/OP to receive signal ENIOP and to allow the I/OP, which has received the BUS access, to load the BUS with the necessary memory address information.

Signals TM10 and TM12 generate, through NOT 65, gate 39 and driver 58, BUS signal DASTRO.

Signals TM4 and TM12 generate, through NOR 48, a register 40 loading signal CL2.

During an I/O cycle, signal CL2 performs the function equivalent to the one of signal CL1 (generated by CPU) to acknowledge the I/OP BUS access requests.

At the end of an I/O cycle, signal TM8 performs the same timing function of CK1 (generated by CPU), that is it activates flip-flop 42 in case a new I/O cycle is to be started.

The preliminary dialogue occurring between the several I/OP to obtain the BUS access therefore overlaps a possible previous memory cycle.

In the case of information transfer between I/OP and memory 4 the transfer rate is $10^9/900$ memory operations per second. The control logic operation of gates 3 is now to be considered and it is to be explained how these ones are timed in function of the memory operations.

With reference to Figure 5 the control logic of gates 3 is substantially constituted by flip-flop 44 and by logical gates 59, 60, 61, 62, 63, 64.

Flip-flop 44 has its inputs J and K permanently at logical level 1, 0 respectively and it is normally in reset. It is activated by a falling edge applied at its clock input which is connected to output TM2 of register 43. Though flip-flop 44 is set only during an I/O cycle and 150 nsec after the beginning of an I/O cycle, when TM2 falls to 0. Flip-flop 44 is reset (or kept in reset) by a signal at logical level 0 applied to the reset input. The reset input is connected to the output of AND gate 61. An input of AND gate 61 is connected to the output of OR gate 60, which receives in input signals TM11, TM14 and command WC. A second input of AND gate 61 is connected to the output of NAND gate 59 receiving in input signals $\overline{CIOCYC}$ and TM11.

Considering the reset logic constituted by gates 59, 60, 61 it can be seen that flip-flop 44 receives a reset command at two well identified instants:

—In the case of a read I/O cycle (command WC=0) before the end of the cycle, with the falling of TM11 to 0, when TM4 is already at 0, that is 350 nsec after the beginning of the memory cycle;

—In the case of a write I/O cycle (command WC=1), if a new cycle of I/O has not started and therefore $\overline{CIOCYC}$=1, with the rising of TM11 50 nsec before the end of the memory cycle.

Considering again Figure 5, the signal present at the output of flip-flop 44 establishes the status of signals S1, S0 of channel 10.

Direct output Q of flip-flop 44 supplies signal S1.

Inverted output $\overline{Q}$ supplies an input signal to AND gate 62 supplying in output signal S0. A second input of AND gate 62 is connected to the output of NAND gate 63. This receives in input signal 0A and command $\overline{0A}$.

OR gate 64 receiving in input signal 0A and command CDOUT, supplies in output on channel 10 selection signal GA.

The status of gates 3 according to the logical level of control signals S1, S0, GA is established by the following Table;

| S1 | S0 | GA | STATUS | |
|----|----|----|--------|----|
| 0 | 0 | X | A→B, | A→C |
| 0 | 1 | 0 | B→A, | B→C |
| 1 | 0 | 0 | C→B, | C→A |
| 1 | 0 | 1 | C→B | |
| 0 | 1 | 1 | B→C | |

Character X in the table indicates an indifference condition.

The table shows that particular combination of control levels enable gates 3 to the information transfer from a (input) gate to both the other gates.

It is now possible to consider the control logic operation in the different possible cases which may be cut into two groups:

FIRST GROUP: CPU1 memory access operations or CPU internal operations.

Since no I/O operation is running flip-flop 44 is certainly reset and S1=0. Further, during the first phase of the machine cycles ($\emptyset$A=1, $\overline{\emptyset A}$=0) it is certainly S0=1 and GA=1.

Gates 3 carry out connection B→C which is not used, while gate A corresponding to channel 7A is isolated.

It is therefore assured that no information is received on channel 7A from CPU1 outside, when, during the first phase of the cycle, channel 7A is used to trasnfer register 14 (ROR1) microcommands to inputs DAB of RALU 11 (Figure 3).

For the second phase of the machine cycles ($\emptyset$A=0, $\overline{\emptyset A}$=1) the following cases are present.

1' CASE—Memory 4 addressing or writing.

Since CDOUT=1 and 0A=1 it results S0=0 and GA=1.

Gates 3 carry out connections A→B, A→C with a delay as to commutation of 0A, $\overline{0A}$ depending on the propagation times of the logical chain NAND 63, AND 62, gates 3. The propagation time can be restrained within 50 nsec.

Therefore even in the most critical case of memory addressing, when signal GOMM is generated, gates 3 are already enabled and the connections already established.

Connection A→B is always used while connection A→C is used in particular conditions (I/O command) which will be considered later on.

2' CASE: Memory 4 reading, or CPU1 internal operations.

Since CDOUT=0 it results S0=1 and GA=0.

Gates 3 carry out connections B→A, B→C with the already considered delay. No timing criticism are present as the information are loaded into RALU 11 at the end of the machine cycle only. Connection B→A is actually used. Connection B→A is not used.

In case of internal cycle no interferences are present between internal data and external ones on channel 7A.

SECOND GROUP: I/OP memory access operations.

Such operations occur through the activation of an I/O cycle and are constituted by a first phase of memory 4 addressing and by a second phase of writing or reading. The timing unit (register 43) is activated for all the operations of this group.

Therefore, with the falling of TM2, flip-flop 44 is set and remains in set during the whole first phase. So S1=1 and S0=0. CDOUT can be both at logical level 1 (writing operation) and at logical level 0. Though GA can be at logical level 1 as well as at logical level 0. Anyway connection C→B is assured which is commanded at the beginning of the BUS cycle and is certainly effective at the beginning of the memory cycle.

Further, if GA=0, connection C→A is actuated. However any interference is avoided between the data present on channel 7A and the information used in CPU1 cycles performed at the same time, because during the first phase of CPU1 cycles (0A=1) it is certainly GA=1 and possible external operations (memory addressing) are suspended before the second phase is started.

For the second phase of I/O cycles the following cases are possible:

1' CASE—Writing operation

The already actuated connection C→B must be kept till the end of the cycle. In fact I/ORW=1 and therefore WC=1.

Signal WC=1 masks the possible reset action caused by TM11 falling through OR 60. The reset action is performed, through NAND 59, by the rising of TM11 when the I/O cycle is completed and provided no new I/O cycle has started.

2' CASE—Reading operation

During the second phase of the cycle B→C must be established. In fact in this case I/ORW=0 and therefore WC=0.

With the falling of TM11 to 0, that is 350 nsec after the beginning of the memory cycle, when TM4 is already at logical level 0, the output of OR 60 falls to 0 and flip-flop 44 is reset.

Therefore it results: S1=0 and since certainly CDOUT=0 it also results S0=1.

Anyway connection B→C is assured and if GA=0 connection B→A is assured too.

However any interference with the information used in the CPU1 cycles performed at the same time is avoided for the same reasons mentioned for the previous case.

As it can be verified, connection B→C is maintained till the end of the BUS cycle.

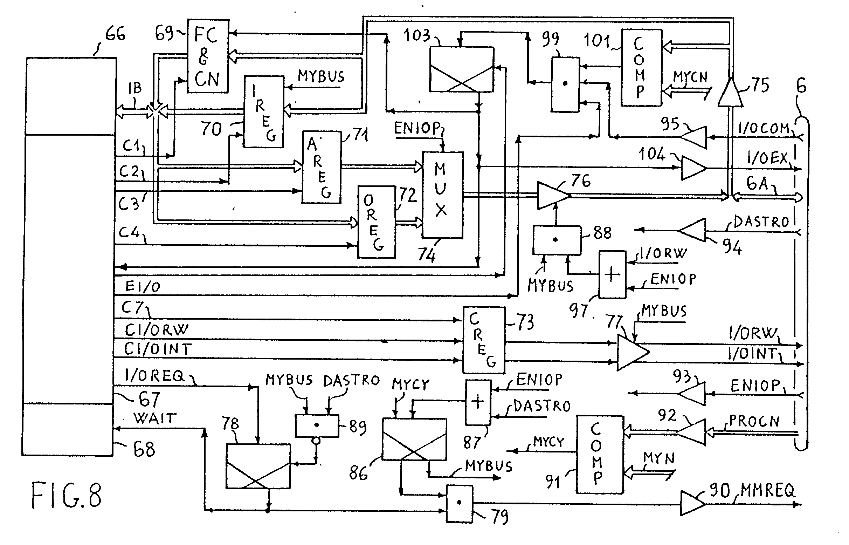

Figure 8 shows, in block diagram, the architecture of a peripheral controller, or I/OP, which is conventional except for some features which will be mentioned.

The controller comprises a logical/arithmetical unit (comprising working registers) RALU 66, a microprogrammed control unit 67 and a timing unit 68. Such units are completely conventional and any further description is omitted.

Unit RALU 66 communicates, through an internal bus IB, with the outputs of some input registers 69, 70 and with the inputs of some output registers 71, 72, 73.

Besides generating some control commands for RALU 66, control unit 67 generates some external commands C1, ..., C7, CI/ORW, CI/OINT, I/OREQ.

Timing unit 68 supplies unit 66 and 67 with suitable timing signals. Its working can be interrupted by a signal WAIT received from the outside.

Command C1 and C2 enable the outputs (normally having high impedance) of registers 69, 70 respectively.

Commands C3, C4, C7 enable the loading of registers 71, 72, 73 respectively.

The inputs of registers 69, 70 are connected to channel 6A of BUS 6 thorugh interface receivers 75. The outputs of registers 71, 72 are connected to the inputs of multiplexer 74. The outputs of multiplexer 74 are connected to channel 6A through interface drivers 76 of "tristate" type. These are enabled by a signal at logical level 1 in output from an AND gate 88.

Register 73 receives in input the commands C/IORW, CI/OINT, latches them with command C7 and transfers them to leads I/ORW and I/OINT of BUS 6 through tristate interface drivers 77. Tristates 77 are enabled by a signal MYBUS.

Command I/OREQ, specifying that the I/OP wants to perform an input/output operation through bus 6, is applied to the set input of a flip-flop 78 and sets it.

The direct output of flip-flop 78 is connected to interface lead MMREQ through an AND gate 79 and an interface driver 90. When flip-flop 78 is set and gate 79 is enabled, a memory access request is generated on lead MMREQ.

A comparator 91 has a set of inputs connected to leads PROCN of BUS 6 through interface receivers 92. A code MYN identifying the specific I/OP is permanently applied to a second group of inputs. When the code present on leads PROCN is equal to MYN, comparator 91 generates a signal MYCY in output.

Through interface receivers 93, 94, 95 the I/OP receives signals ENIOP, DASTRO, I/COM transmitted by the omonimous leads of BUS 6.

Signal MYCY is applied to the input J of a flip-flop 86.

Output Q̄ of flip-flop 86 is connected to the enabling input of gate 79. When flip-flop 86 is set a signal MYBUS is generated at its output Q.

Flip-flop 86 receives interface signals ENIOP, DASTRO, at the clock input through OR gate 87.

The reset input of flip-flop 78 is connected to the output of a NAND gate 89 receiving in input signals MYBUS and DASTRO.

To access a memory the I/OP loads registers 71 with a memory address and, if the operation is a writing one, it loads register 72 with data to be written. Further it generates suitable commands.

Command CI/ORW at logical level 1 loaded into register 73 means that the operation is a write one. With command I/OREQ the I/OP sets flip-flop 78 and generates signal MMREQ on the omonimous lead.

When flip-flop 78 is set a waiting signal WAIT is further sent to the timing unit and the I/OP waits for the acceptance of its request.

When control unit 2 (Figure 5) grants the BUS access to the I/OP, it generates on lead PROCN a code equal to the I/OP code MYN and comparator 91 generates signal MYCY.

Subsequently unit 2 sends command ENIOP. At ENIOP reception flip-flop 86 is set and generates signal MYBUS.

Multiplexer 74 is controlled by signal ENIOP for the transfer to the outputs of the content of register 71 when ENIOP=1.

AND gate 88 receives in input signal MYBUS and through OR gate 97 signal ENIOP. Though, with the set of flip-flop 86, tristates 76 are enabled and the memory address contained in register 71 is transferred to channel 6A.

Tristates 77 too are enabled and signal I/ORW is transferred on the omonimous lead of BUS 6.

If a write operation is required, when ENIOP falls to 0, tristates 76 are still enabled owing to signal I/ORW applied to an input of OR 97.

Then multiplexer 74 transfers to channel 6A the data to be written in memory and contained in regsiter 72. If a read operation is required tristates 76 are inhibited when signal ENIOP falls to 0. At the end of the operation, that is of the BUS cycle, signal DASTRO causes the reset of flip-flop 78 through NAND gate 89 and the reset of flip-flop 86 through OR gate 87. Further the falling of signal MYBUS controls the loading of the information present on channel 6A into register 70 completing a possible requested read operation.

Processors I/OP as the ones shown in Figure 8 are able to communicate with CPU1 through memory 4. They can load, through memory write operations, some messages intended for CPU1 into a memory zone named MAILBOX. Concurrently with the last memory write operation the I/OP generates signal CI/OINT which is transferred as interruption signal on leads I/OINT.

Considering unit 2 (Figure 5) it can be seen that the signal on lead I/OINT is transferred through interface receiver 98 and OR gate 96 to J input of flip-flop 45.

Flip-flop 45 is set by the rising edge of signal TM10.

Output Q of flip-flop 45 therefore sends signal INT to CPU1, through channel 7B. This signal is considered by CPU1 during particular phases of its process.

To avoid the falling of signal INT before being considered by CPU1, output Q of flip-flop 45 is connected to a second input of OR gate 96.

When CPU1 considers the interruption, that is reads out the message from the MAILBOX, with a memory reading cycle at least, during this cycle it generates signal RSINT which resets flip-flop 45.

The communication process through MAILBOX is known in the art and is beyond the scope of the invention. Therefore a further description is not required.

The same communication mechanism through MAILBOX is used by CPU1 to send messages to I/OP.

However the particular system architecture object of the invention supplies some advantages.

When CPU1 wants to send a message (generally some instructions or commands) to a particular I/OP, it loads the message into the MAILBOX with memory reading operations.

A component of the message is a function code FC and a channel number CN identifying the I/OP to which the message is addressed.

When CPU1 loads channel 7A with code FC and channel number CN for writing in memory 4, it also generates command I/OC and signal I/OCOM (Figure 3). Such signal is transferred from unit 2 (Figure 5) through driver 32 to the omonimous lead of channel 6B and it is received by the I/OP connected to BUS 6.

It is to be noted that, thanks to the control logic of gates 3, code FC and channel number CN are transferred both on memory channel 8A and on channel 6A too.

Each I/OP (Figure 8) comprises a comparator 101 having an input set connected, through receivers 75, to channel 6A and a second input set to which a code MYCN, or specific channel number for each I/OP, is permanently applied. When comparator 101 of an I/OP receives in input coincident codes, it generates in output a signal at logical level 1.

The output of comparator 101 is connected to the input of an AND gate 99, receiving on a second input I/OCOM, through receiver 95, and on a third input an enabling signal EI/O coming from control unit 67.

The output of AND gate 99 is connected to the clock input of a flip-flop 103 which is set when I/OP detects that the message is intended for it and is enabled to receive such message.

Direct output Q of flip-flop 103, when set, provides control unit 67 with a control signal received by CPU1, loads channel 6, through a driver 104, with signal I/OEX (which is received by CPU through receiver 31 of Figure 5) and further enables register 69 to load the information (FC and CN) present of channel 6A.

In this way if the I/OP is provided with register 69 it can verify the right destination (CN) of the I/O command and consider an essential component of the message (function code FC) without requiring a memory access which could be refused for a certain time owing to the possible presence of prioritary memory access requests.

Besides, the disclosed architecture allows the use of I/OP provided or deprived with buffer register for I/O commands since the I/O command is however recorded in memory.

In conclusion the present architecture offers the following advantages.

It cuts to the minimum the communication time between CPU1 and memory 4 because no preliminary dialogue for access to the bus is required when CPU1 wants access to the memory though CPU1 priority is lower than I/OP one. This because the control of the memory access requests is normally synchronized with the machine cycle of CPU1 and because the communication between CPU1 and memory is established by the connection between the memory gate and the CPU internal channel with the interposition only of tridirectional gates 3. The synchronization between CPU1 and memory allows to eliminate any CPU1 buffer register between internal channel and memory channel.

Tridirectional gates 3 carry out the double function of drivers and receivers both for CPU1 side and for memory side, with a reduction in the component number and in the propagation time.

The architecture does not hamper the communication time between I/OP and memory 4 because the I/OP preliminary dialogue of memory access, when the memory is activated by an I/OP, overlaps the memory cycle and is synchronized with the memory cycle. Then waiting delay is not introduced for the preliminary dialogue or for the synchronization with CPU, when several I/OPs want access to the BUS.

The connection and the transfer of information from CPU1 to the BUS can be simultaneously made to memory 4 and to an I/OP.

The disclosed architecture can be implemented with the components available on the market and currently used in the implementation of EDP systems, excepted for the tridirectional gates recently put on the market by US firm Texas Instruments with code 74LS5442.

**Claims**

1. Data processing system in which a central processor (CPU) (1) and a plurality of input/output processors (I/OP (5-1, . . . , 5-N) communicate with a common memory (4) and operate in a way asynchronous and independent the one from the other on the basis of internal cycles, and a memory access control unit (2) in said CPU receives memory access requests from said CPU and said I/OP and grants access to only one I/OP at a time or to said CPU solving access conflicts on the basis of a preestablished priority assigned to said access requests, characterized by that it comprises:

—a system bus (6) for the parallel connection of said I/OP,

—a memory access control unit in said CPU comprising a set of gates (3) for the selective connection of an input/output internal channel (7A) of said CPU with an input/output channel (8A) of said memory and of said system bus with said memory input/output channel,

—control means in said memory access control unit for periodically monitoring in synchronism with the CPU internal cycles, the presence of access requests from said I/OP, for controlling, when I/OP access requests are not present, said set of gates to connect said CPU internal channel to said memory channel and for transferring a possible memory activation command generated by said CPU to said memory,

—timing means (43, 56) in said memory access control unit, activated by the detection of said I/OP access requests, for generating a timing cycle of said control means, said control means during said timing cycle providing for the generation of signal allowing bus access to the most priority I/OP among the ones concurrently requesting access, for the control of said set of gates to connect said bus with said memory input/output channel, for the generation of a memory activation command, for the acknowledging, in timed relation with said timing cycle, the presence of further I/OP access requests.

2. System according to claim 1 characterized by that said set of gates (3) consists of a set of tridirectional transmitting/receiving gates.

3. System according to claim 2, characterized by that said set of gates (3) selectively connects, on command from said memory access control unit, said CPU internal channel (7A) to both said input/output memory channel (8A) and to said bus (6).

4. System according to claim 3, characterized by that said CPU comprises means (16) for generating an input/output command that each I/OP comprises means (95) able to receive such I/OP command, a comparator (101) having an input connected to said system bus (6) to compare a binary code, generated by said CPU and transferred through said set of gates on both said input/output memory channel (8A) and on said bus (6) with an internal recognition code, and by that at least one of said I/OP comprises an interface register (69, 70) having the input connected to said system bus, for the loading in said interface register, at the reception of said input/output command by said I/OP and when said binary code coincides with said internal recognition code, said binary code together with other information generated by said CPU and transferred through said set of gates on both said input/output memory channel (8A) and said bus (6).

## Patentansprüche

1. Datenverarbeitungssystem in welchem ein Zentralprozessor (CPU) (1) und mehrere Ein/Ausgabeprozessoren (I/OP) (5-1, . . . , 5-N) mit einem gemeinsamen Speicher (4) im Informationsaustausch stehen und auf der Basis interner Zyklen asynchron und unabhängig voneinander arbeiten und wobei eine Speicherzugriffssteuereinheit (2) im Zentralprozessor Speicherzugriffsanforderungen vom Zentralprozessor und den Ein/Ausgabeprozessoren empfängt und zu jeder Zeit Zugriff jeweils nur für einen Ein/Ausgabeprozessor oder den Zentralprozessor gewährt und dadurch Zugriffskollisionen auf Grund einer vorgegebenen, den Zugriffsanforderungen zugeordneten Priorität verhindert, gekennzeichnet durch

—einen Systembus (6) zum Parallelanschluß der Ein/Ausgabeprozessoren;

—eine Speicherzugriffssteuereinheit im Zentralprozessor, welche eine Gruppe von Gattern (3) aufweist, zum selektiven Anschluß eines internen Ein/Ausgabekanals (7A) des Zentralprozessors an einen Ein/Ausgabekanal (8A) des Speichers sowie zum Anschluß des Systembusses an den Speicherein/ausgabekanal;

—eine Steuereinrichtung in der Speicherzugriffssteuereinheit, um synchron mit den internen Zentralprozessor-Zyklen die Anwesenheit von Zugriffsanforderungen der Ein/Ausgabeprozessoren zu überwachen und beim Fehlen solcher Zugriffsanforderungen der Ein/Ausgabeprozessoren die Gruppe von Gattern derart zu steuern, daß sie den internen Zentralprozessorkanal an den Speicherkanal anschließt, um einen möglicherweise vom Zentralprozessor erzeugten Speicheraktivierungsbefehl zum Speicher zu übertragen;

—einen Zeitgeber (43, 56) in der Speicherzugriffssteuereinheit, der durch die Feststellung der Zugriffsanforderung der Ein/Ausgabeprozessoren aktiviert wird und einen Zeitzyklus der Steuereinrichtung erzeugt, welche während dieses Zeitzyklus ein Signal erzeugt, das von den gleichzeitig anstehenden Zugriffsanforderungen derjenigen mit der höchsten Priorität den Buszugriff gestattet, wobei die Gruppe von Gattern derart gesteuert wird, daß der Bus mit dem Speicherein/ausgabekanal verbunden wird, ein Speicheraktivierungssignal erzeugt wird und in zeitlicher Beziehung zum Zeitgeberzyklus die Anwesenheit von Zugriffsanforderungen weiterer Ein/Ausgabeprozessoren bestätigt wird.

2. System nach Anspruch 1, dadurch gekennzeichnet, daß die Gruppe von Gattern (3) aus einer Gruppe von Dreirichtungs-Sende/Empfangsgattern besteht.

3. System nach Anspruch 2, dadurch gekennzeichnet, daß die Gruppe von Gattern (3) auf einen Befehl der Speicherzugriffssteuereinheit selektiv den internen Zentralprozessorkanal (7A) sowohl mit dem Speicherein/ausgabekanal (8A) als auch mit dem Bus (6) verbindet.

4. System nach Anspruch 3, dadurch gekennzeichnet, daß der Zentralprozessor (1) eine Vorrichtung (16) zum Erzeugen eines Ein/Ausgabebefehls aufweist und jeder Ein/Ausgabeprozessor eine zum Empfang solcher Befehle geeignete Einrichtung (95) umfaßt; ein Vergleicher (101) mit einem an den Systembus (6) angeschlossenen Eingang einen vom Zentralprozessor erzeugten und über die Gruppe von Gattern sowohl zum Speicherein/ausgabekanal (8A) als auch zum Bus (6) übertragenen Binärcode mit einem internen Erkennungscode vergleicht; und wenigstens einer der Ein/Ausgabeprozessoren ein Schnittstellenregister (69, 70) mit einem an den Systembus angeschlossenen Eingang aufweist, um beim Empfang des Ein/Ausgabebefehls durch den Ein/Ausgabeprozessor und bei Übereinstimmung des Binärcodes mit dem internen Erkennungscode den Binärcode zusammen mit anderen vom Zentralprozessor erzeugten und über die Gruppe von Gattern sowohl an den Speicherein/ausgabekanal (8A) als auch an den Bus (6) übertragenen Informationen in das Schnittstellenregister lädt.

## Revendications

1. Un système de traitement de données dans lequel un processeur central (CPU) (1) et plusieurs processeurs d'entrée/sortie (I/OP) (5-1,..., 5-N) communiquent avec une mémoire commune (4) et fonctionnent de façon asynchrone et indépendante de l'un vers l'autre sur la base de cycles internes, et une unité de contrôle d'accès en mémoire (2) dans ledit CPU reçoit des demandes d'accès en mémoire issues dudit CPU et desdits I/OP et accorde l'accès à un seul I/OP à la fois ou audit CPU un résolvant les conflits d'accès sur la base d'une priorité préétablie attribuée aux dites demandes d'accès, caractérisé en ce qu'il comprend:

—un bus système (6) pour la connexion en parallèle desdits I/OP,

—une unité de contrôle d'accès en mémoire dans ledit CPU comprenant un ensemble de portes (3) pour la connexion sélective d'un canal interne d'entrée/sortie (7A) dudit CPU avec un canal d'entrée/sortie (8A) de ladite mémoire et dudit bus système avec ledit canal d'entrée/sortie de mémoire,

—un moyen de contrôle dans ladite unité de contrôle d'accès en mémoire pour surveiller périodiquement en synchronisme avec les cycles internes du CPU, la présence de demandes d'accès issues desdits I/OP, pour contrôler, lorque les demandes d'accès des I/OP ne sont pas présentes, ledit ensemble de portes pour connecter ledit canal interne de CPU audit canal de mémoire et pour transférer une éventuelle commande de déclenchement de la mémoire par ledit CPU à ladite mémoire,

—un moyen de synchronisation (43, 56) dans ladite unité de contrôle d'accès en mémoire, déclenchée par la détection desdites demandes d'accès des I/OP, pour générer un cycle de synchronisation dudit moyen de contrôle, ledit moyen de contrôle pendant ledit cycle de temporisation assurant la génération d'un signal permettant l'accès du bus aux I/OP les plus prioritaires parmi ceux demandant l'accès concurremment, pour le contrôle dudit ensemble de portes pour connecter ledit bus avec ledit canal d'entrée/sortie de mémoire, pour la génération d'une commande de déclenchement de la mémoire, pour la reconnaissance, en synchronisation avec ledit cycle de synchronisation, de la présence de demandes d'accès des I/OP supplémentaires.

2. Un système selon la revendication 1 caractérisé en ce que ledit ensemble de portes (3) est constitué d'un ensemble de portes de transmission/réception tridirectionnelles.

3. Un système selon la revendication 2, caractérisé en ce que ledit ensemble de portes (3) connecte de façon sélective, sur ordre de l'unité de contrôle d'accès en mémoire, ledit canal interne du CPU (7A) aussi bien audit canal de mémoire d'entrée/sortie (8A) qu'audit bus (6).

4. Un système selon la revendication 3 caractérisé en ce que ledit CPU comprend un moyen (16) pour générer une commande d'entrée/sortie et en ce que chaque I/OP comprend un moyen (95) capable de recevoir cette commande des I/OP, un comparateur (101) ayant une entrée connectée audit bus système (6) pour comparer un code binaire, généré par ledit CPU et transféré par l'intermédiaire dudit ensemble de portes aussi bien sur le canal de mémoire d'entrée/sortie (8R) que sur ledit bus (6) avec un code de reconnaissance interne, et en ce que qu'au moins un de ces I/OP comprend un registre d'interface (69, 70) ayant l'entrée connectée à ce bus système, pour le chargement dans ce registre d'interface, à la réception de ladite commande d'entrée/sortie par lesdits I/OP et lorsque ledit code binaire coïncide avec ledit code de reconnaissance interne, ledit code binaire ainsi que l'autre information générée par ledit CPU et transféré par l'intermédiaire dudit ensemble de portes sur aussi bien le canal de mémoire d'entrée/sortie (8A) que sur ledit bus (6).

FIG.1

FIG.2

FIG.3

FIG.4

FIG.5

FIG.6

FIG.7

FIG.8